# EUROPÄISCHE PATENTSCHRIFT

(11) **EP 2 458 346 B1**
(45) Veröffentlichungstag und Bekanntmachung des Hinweises auf die Patenterteilung: **19.06.2013**
(21) Anmeldenummer: 10192865.3
(22) Anmeldetag: 29.11.2010
(51) Int. Cl.: G01F 13/00, A61J 11/00, A61J 9/00

(54) **Dosiereinheit für pulver- oder granulatförmiges Dosiergut**
Metering unit for dosing material in powder or granular form
Unité de dosage pour un matériau de dosage en forme de poudre ou de granulé

(43) Veröffentlichungstag der Anmeldung: 30.05.2012
(73) Patentinhaber: Mettler-Toledo AG, 8606 Greifensee (CH)
(72) Erfinder: Bohler, Lorenz, 4313, Möhlin (CH)

(56) Entgegenhaltungen:
- EP-A1- 0 527 976
- WO-A1-2004/103816

## Beschreibung

Die vorliegende Erfindung bezieht sich auf eine Dosiereinheit für pulver- oder granulatförmiges Dosiergut.

Solche Dosiereinheiten werden zum hochpräzisen Dosieren von Substanzen verwendet. Dabei wird eine gewünschte Menge Substanz aus der Dosiereinheit ausgetragen und in ein Zielgefäss eindosiert. Häufig sind solche Zielgefässe auf einer Waage platziert, um die Menge der aus der Dosiereinheit ausgetragenen Substanz zu verwiegen, so dass sie anschliessend bestimmungsgemäss weiter verarbeitet werden kann.

In der EP 0 527 976 B1 wird eine Dosiereinheit beschrieben, welche ein Gehäuse mit einem Aufnahmeraum für Dosiergut und einen aus elastischem Material bestehenden Dosierkopf aufweist. Der Dosierkopf ist in der Art eines Babyflaschenschnullers geformt und weist einen schlitzförmigen Auslass auf, welcher von Aussen durch seitliche Kraft- beziehungsweise Druckeinwirkung aus zwei einander gegenüberliegenden Richtungen geöffnet werden kann. Damit bei der Austragung von Dosiergut keine Pulverbrücken entstehen können, können diese Pulverbrücken mit einem nadelförmigen Aktuator zerstört werden. Dieser wird vor der Inbetriebnahme seitlich durch das elastische Material soweit hindurch gesteckt, dass dessen Spitze durch den schlitzförmigen Auslass ragt. Mittels dieser Dosiereinheit können kleinste Mengen pulverförmigen Dosierguts hochpräzise ausgetragen werden. Sie weist jedoch den Nachteil auf, dass der durch den schlitzförmigen Auslass ragende Aktuator verhindert, dass die Auslasslippen sich in diesem Bereich berühren wodurch ein kleines Leck entsteht. Solange die Dosiergut-Partikel grösser sind als dieses Leck, stellt dies kein Problem dar. Bei kleineren Partikeln kann es aber geschehen, dass kleinste Mengen durch das Leck unbeabsichtigt austreten. Um dieses Problem zu lösen, kann der nadelförmige Aktuator soweit zurückgezogen werden, dass dessen Spitze im Innenraum des Dosierkopfs angeordnet ist. In dieser Ausführung können aber auch Lecks entstehen, wenn beim Schliessvorgang grössere Partikel zwischen den beiden Auslasslippen eingeklemmt werden.

In der WO 2004/103816 wird ein Kopplungselement zum Befüllen von Behältnissen offenbart, wobei das Kopplungselement zwei Verschlussleisten aufweist. Im geschlossenen Zustand liegt die Innenseite der beiden Verschlussleisten aufeinander. Durch seitliche Kraft- beziehungsweise Druckeinwirkung aus zwei zueinander entgegengesetzten Richtungen buchten sich die beiden Verschlussleisten in zueinander entgegengesetzten Richtungen aus, wodurch das Kopplungselement geöffnet wird. Beim Schliessvorgang können grössere Partikel zwischen den beiden Verschlussleisten eingeklemmt werden.

Die Aufgabe der vorliegenden Erfindung ist daher, die vorgenannte Dosiereinheit dahingehend zu verändern, dass sich die Auslassöffnung immer sicher verschliessen lässt.

Diese Aufgabe wird mit einer Dosiereinheit gelöst, welche die im unabhängigen Patentanspruch angegebenen Merkmale aufweist.

Eine Dosiereinheit für pulver- oder granulatförmiges Dosiergut beinhaltet ein Gehäuse, mindestens ein im Gehäuse ausgebildeter Aufnahmeraum zur Aufnahme von Dosiergut und mindestens ein, elastisches Material aufweisender Dosierkopf. Der Dosierkopf weist einen im unbelasteten Zustand schlitzförmigen, durch eine erste Auslasslippe und eine zweite Auslasslippe begrenzten Auslass auf, welcher unter seitlicher Belastung variabel erweiterbar ist. Ferner ist mindestens ein erstes Übertragungsmittel vorhanden, durch welches relativ zur zweiten Auslasslippe und in Längsrichtung derselben, eine oszillierende Bewegung auf die erste Auslasslippe übertragbar ist. Während des Schliessvorganges der Auslassöffnung werden durch die erfindungsgemässen Bewegungen der ersten Auslasslippe in Längsrichtung zur zweiten Auslasslippe Partikel des Dosiergutes aus dem Bereich der Auslasslippen gefördert. Damit kann erreicht werden, dass keine Partikel zwischen den geschlossenen Auslasslippen eingeklemmt werden. Dies führt zu einer äusserst schliesssicheren Arbeitsweise des Dosierkopfs. Diese ist insbesondere dann wichtig, wenn hochtoxische Substanzen dosiert werden sollen. Durch die Bewegungen der Auslasslippen kann die gewünschte Dosiergutmenge noch präziser ausdosiert werden, als mit der in der EP 0 527 976 B1 offenbarten Vorrichtung, da die erfindungsgemässen Bewegungen der Auslasslippen ein rasches Schliessen derselben ermöglicht. Die Funktion des Dosierkopfs, insbesondere das Öffnen und Schliessen des Auslasses wird in der EP 0 527 976 B1 ausführlich erklärt und erfolgt in der vorliegenden Erfindung in gleicher Weise, weshalb deren Inhalt hiermit vollumfänglich in die Beschreibung aufgenommen wird.

Je nach Ausgestaltung der Innenkontur des Dosierkopfs führen die oszillierenden Bewegungen ferner zu einer erheblich höheren Ausflussgeschwindigkeit und damit zu einer höheren Austragungsleistung des Dosiergutes aus der Auslassöffnung, da sich die Bewegungen auf das im Dosierkopf befindliche Dosiergut übertragen und die Bildung von Pulverbrücken verhindern können.

In einer Weiterbildung der Erfindung können den oszillierenden Bewegungen der ersten Auslasslippe in Längsrichtung oszillierende zweite Bewegungen orthogonal zur Längsrichtung und Schliessrichtung der Auslasslippen überlagert sein. Selbstverständlich dürfen diese zweiten Bewegungen nur sehr kurzhubig sein, so dass der Hub der zweiten Bewegung nicht grösser ist als die Breite der Auslasslippen. Wenn der Hub grösser als die Breite der Auslasslippen wäre, würde dies zu einem periodisch teilweisen Öffnen der Auslassöffnung führen, da sich die Auslasslippen nicht mehr vollständig überdecken könnten.

Ferner kann ein zweites Übertragungsmittel vorhanden sein, durch welches Übertragungsmittel auf die zweite Auslasslippe eine oszillierende Bewegung übertragbar ist. Damit der erfindungsgemässe Effekt des Entfernens zwischen den Auslasslippen eingeklemmter Dosiergut-Partikel stattfinden kann, müssen sich die oszillierenden Bewegungen der ersten Auslasslippe zu jener der zweiten Auslasslippe zumindest in ihren Amplituden und/oder in den zueinander parallelen Bewegungsrichtungen unterscheiden.

Das Übertragungsmittel kann als Zone höherer Steifigkeit im elastischen Material des Dosierkopfs ausgebildet sein, die an die zugeordnete Auslasslippe angrenzt und eine Verbindungsstelle für ein Übertragungsglied aufweist. Die höhere Steifigkeit kann auf verschiedene Art und Weise erreicht werden, beispielsweise durch Materialanhäufungen, durch die lokale Anordnung von steiferen Materialien, durch Einbetten starrer Armierungsteile und dergleichen mehr. Insbesondere die modernen Kunststoff-Spritzgiessverfahren ermöglichen eine nahezu unerschöpfliche Gestaltungsvielfalt mit Elastomeren unterschiedlicher Shore-Härte.

Die Verbindungsstelle muss nicht zwingend als Kupplungsteil oder funktionsspezifisch gestaltete Zone ausgebildet sein. Sie kann auch ein Materialübergang vom Übertragungsmittel zum Übertragungsglied sein. Dies ist beispielsweise dann der Fall, wenn das Übertragungsmittel eine als Übertragungsglied dienende, angeformte Nase aufweist.

Die Bewegungen der Auslasslippen werden durch mindestens einen Antrieb erzeugt, welcher auf das Übertragungsmittel einwirkt. Eine einfache Lösung besteht darin, eine Nadel als Übertragungsglied mit der Verbindungsstelle zu verbinden. Die Nadel ist daher zwischen dem Antrieb des Übertragungsmittels und dem Übertragungsmittel angeordnet.

Zur Verhinderung der Bildung von Pulverbrücken kann ferner ein Aktuator im Aufnahmeraum angeordnet und mit dem Übertragungsmittel verbunden sein. Beispielsweise kann dieser Aktuator eine Drahtspirale sein, die mit einer geeigneten, in der Nähe des Auslasses ausgebildeten Aufnahmestelle des Übertragungsmittels verbunden ist. Die Drahtspirale erstreckt sich vom Dosierkopf in den Aufnahmeraum hinein. Die Länge der Drahtspirale und deren Steifigkeit können auf das Dosiergut abgestimmt sein.

Selbstverständlich kann auch bei der vorliegenden Dosiereinheit wie schon in der EP 0 527 976 B1 offenbart, zusätzlich eine Aktivator-Nadel angeordnet sein, die eine elastischen Wand des Dosierkopfs durchdringt. Jedoch darf die Nadelspitze nicht durch den Auslass des Dosierkopfs ragen, da sonst der weiter oben angeführten Nachteil eines undichten Auslasses auftreten würde. Folglich ist das eine Ende der Aktivator-Nadel im Aufnahmeraum angeordnet und das andere Ende mit einem Antrieb des Übertragungsmittels oder mit einem Aktivator-Antrieb verbunden.

Um die Dosiereinheit auch als Lagerbehälter einsetzen zu können und ferner ein unabsichtliches Öffnen des Auslasses während manueller oder automatisierter Bewegungsabläufe zu verhindern, kann eine Schutzkappe vorhanden sein, die im aufgesetzten Zustand die Auslasslippen des Dosierkopfs vollständig abdeckt. Die Schutzkappe wird erst entfernt, wenn die Dosiereinheit in der Halterung eines dafür vorgesehenen Dosiergeräts eingesetzt ist.

Um die Abdichtung des Dosierkopfs zu verbessern, kann an einer elastischen Wand des Dosierkopfs ein Dichtring an der dem Aufnahmeraum abgewandten Seite angeformt sein. Diese Abdichtung kann nicht nur dazu verwendet werden, dass die Schutzkappe mittels Kraftschluss besser am Dosierkopf hält und/oder diesen gasdicht abschliesst. Gegebenenfalls kann mittel dieses Dichtrings auch ein anschliessendes Behältnis, beispielsweise ein Schlauch, ein Rohr und dergleichen mehr am Dosierkopf befestigt werden und den Ringspalt zwischen dem Dosierkopf und dem anschliessenden Behältnis ausreichend abdichten, so dass die Umgebung nicht durch austretendes Dosiergut kontaminiert werden kann. Sofern das Behältnis eine zum Dichtring passende Nut aufweist, kann das Behältnis mit dem Dosierkopf formschlüssig verbunden werden. Diese Verbindung muss aber nicht zwingend so ausgestaltet sein. Denkbar sind auch eine Flanschverbindung, Schraubverbindung, ein Klebe- oder ein Schweissstutzen sowie Schnapp- und Pressverbindungen.

Der vorliegende Dosierkopf eignet sich aufgrund seiner einfachen Konstruktion und Herstellung hervorragend als Einwegdosierkopf, der nach dem Gebrauch fachgerecht entsorgt werden kann. Für solche Anwendungen kann der Auslass in neuwertigem Zustand beispielsweise mit einer entfernbaren Folie bedeckt sein. Diese Folie wird entfernt, wenn die Dosiereinheit mit Dosiergut verfüllt und in der Halterung eines dafür vorgesehenen Dosiergeräts eingesetzt ist.

Das Gehäuse kann ein flaschenförmiges Behältnis, beispielsweise ein Vial oder eine Flasche aus Glas oder Kunststoff sein. Selbstverständlich kann die Dosiereinheit beziehungsweise das Dosiergerät auch ein integrierter Bestandteil einer Anlage sein. Für solche Anwendungen weist die Dosiereinheit vorzugsweise einen Verbindungsbereich auf, durch die ein Behältnis mit dem Aufnahmeraum verbindbar ist. Das Behältnis kann ein Zuführschlauch, ein Zuführrohr, ein Zusatzbehälter, ein Folienbeutel mit oder ohne Peelnaht, ein Tank, ein Silo und dergleichen mehr sein. Diese können mit dem Verbindungsbereich formschlüssig, kraftschlüssig oder stoffschlüssig verbunden sein.

Um der Dosiereinheit weitere positive Eigenschaften zu verleihen, kann die Oberfläche des Dosierkopfs mit einer Beschichtung versehen sein. Denkbar ist eine antibakterielle Beschichtung, beispielsweise mit Silberionen oder eine leitfähige Schicht die geerdet werden kann um elektrostatische Ladungen abzubauen.

Ferner kann wie beispielsweise in der EP 2 199 208 A1 offenbart, die Dosiereinheit kontaminationssicher ausgestaltet sein. Um den Dosierkopf und das Dosiergut voneinander zu trennen, kann eine schlauchförmige Folie vom Aufnahmeraum durch den Auslass hindurch geführt sein, wobei nur das Innere der schlauchförmigen Folie mit Dosiergut in Berührung kommen kann. Die schlauchförmige Folie kann der Hals eines Beutels, ein Endlosschlauch (auch Liner genannt) oder dergleichen mehr sein, welche aus einem geeigneten Material, beispielsweise einer Polyethylenfolie gefertigt ist. Damit die erfindungsgemässen oszillierenden Bewegungen der Auslasslippe auf den dieser Auslasslippe anliegenden Folienabschnitt übertragbar sind, muss der entsprechende Folienabschnitt der schlauchförmige Folie im Bereich des Auslasses mittels Befestigungsmitteln mit der ersten Auslasslippe und mit der zweiten Auslasslippe mechanisch verbindbar sein. Als Befestigungsmittel können alle bekannten kraftschlüssigen, stoffschlüssigen und formschlüssigen Verbindungselemente eingesetzt werden, beispielsweise Klebeverbindungen, Schweissverbindungen mit integrierten Peelfäden, Klemmleisten, Schnappverbindungen und dergleichen mehr.

Die Dosiereinheit kann in ein Dosiergerät eingesetzt, beziehungsweise daraus entfernt werden, so dass ein einfacher Austausch der Dosiereinheiten möglich ist. Selbstverständlich kann ein Dosiergerät auch mehrere Halterungen aufweisen, so dass es mehrere Dosiereinheiten aufnehmen kann.

Einzelheiten der erfindungsgemässen Dosiereinheit ergeben sich anhand der Beschreibung der in den Zeichnungen dargestellten Ausführungsbeispiele. Es zeigen:
- Figur 1A: in geschnittenem Aufriss eine erfindungsgemässe Dosiereinheit mit einem Gehäuse, mit einem dem Gehäuse anschliessenden Dosierkopf aus elastischem Material und mit einem ersten Übertragungsmittel mit angeformtem Übertragungsglied;
- Figur 1 B: die Dosiereinheit der Figur 1A im Schnitt X-X;
- Figur 2A: in geschnittenem Aufriss ein erfindungsgemässer Dosierkopf aus elastischem Material und einem ersten Übertragungsmittel, mit einem nadelförmigen Übertragungsglied und mit einem Aktuator;
- Figur 2B: der Dosierkopf der Figur 2A in der Ansicht von unten;
- Figur 3: im Aufriss eine erfindungsgemässe Dosiereinheit mit einem beutelförmigen Gehäuse, einem dem Gehäuse anschliessenden Dosierkopf aus elastischem Material, einem ersten und einem zweiten Übertragungsmittel und mit einem ersten und zweiten nadelförmig ausgebildeten Übertragungsglied;
- Figur 4: in teilweise geschnittenem Aufriss eine erfindungsgemässe Dosiereinheit in kontaminationssicherer Ausführung mit einer schlauchförmigen Folie, die ausgehend vom Aufnahmeraum durch den Auslass hindurch geführt ist.

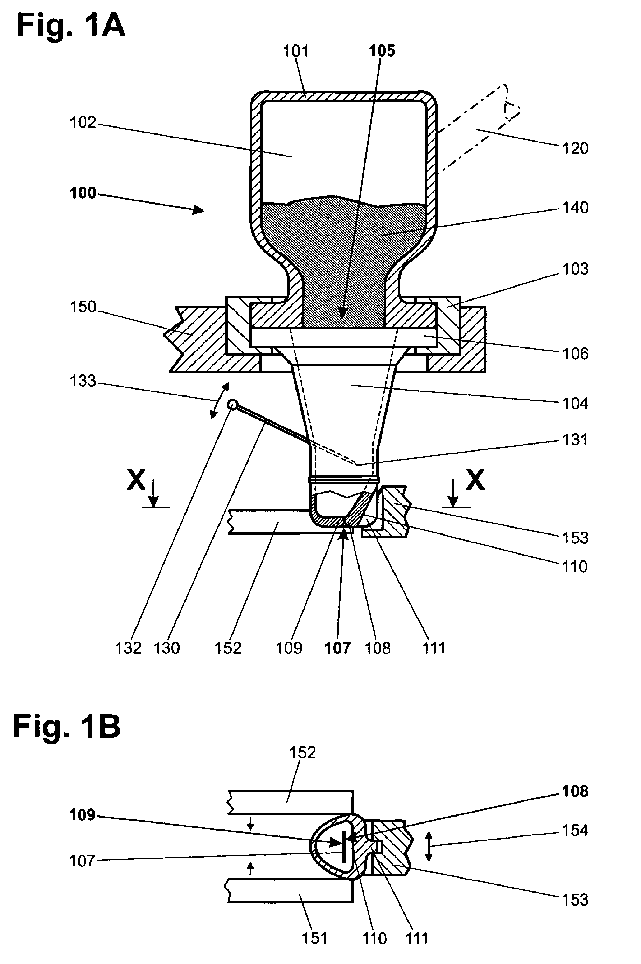

In der Figur 1A ist in geschnittenem Aufriss schematisch eine erfindungsgemässe Dosiereinheit 100 mit einem Gehäuse 101 dargestellt. Im Innern des Gehäuses 101 ist ein Aufnahmeraum 102 für Dosiergut 140 ausgebildet. Das Gehäuse 101 ist flaschenförmig ausgestaltet und weist eine Öffnung 105 auf, durch die der Aufnahmeraum 102 befüllt werden kann. Nach dem Befüllen des Aufnahmeraums 102 mit Dosiergut 140 wird das Gehäuse 101 mittels eines Montagerings 103 mit einem Dosierkopf 104 aus elastischem Material derart verbunden, dass der Dosierkopf 104 die Öffnung 105 vollständig überdeckt. Gattungsgemäss erstreckt sich nach dem Aufsetzen des Dosierkopfs 104 auf das Gehäuse 101 der Aufnahmeraum 102 auch in den Dosierkopf 104 hinein, da zwischen dem als Verbindungsbereich dienenden Befestigungsflansch 106 des Dosierkopfs 104 und einem im Dosierkopf 104 ausgebildeten schlitzförmigen Auslass 107 ein Hohlraum vorhanden ist. Sobald die Dosiereinheit 100 wie in Figur 1 dargestellt, in ihre Betriebsstellung gebracht ist, kann im Aufnahmeraum 102 befindliches Dosiergut 140 unter dem Einfluss der Schwerkraft in den Dosierkopf 104 gelangen.

Selbstverständlich kann das Gehäuse 101 auch eine kontinuierliche Dosiergutzuführung 120 aufweisen, welche in strichpunktierter Linie als Zufuhrrohr dargestellt ist.

Der Dosierkopf 104 weist eine erste Auslasslippe 108 und eine zweite Auslasslippe 109 auf, die in unbelastetem Zustand einander anliegen und den schlitzförmigen Auslass 107 bilden. Die Dosiereinheit 100 wird in befülltem Zustand in ein Dosiergerät 150 eingesetzt, welches nur teilweise dargestellt ist. Dieses weist zwei Backen 151, 152 auf, die zueinander hin bewegt werden können, um damit seitliche Druckkräfte auf den zwischen den Backen 151, 152 positionierten Dosierkopf 104 zu erzeugen. Sobald der Dosierkopf 104 im Bereich des Auslasses 107 wie in der Figur 1B dargestellt, seitlich durch die Backen 151, 152 zusammengedrückt wird, trennen sich die Auslasslippen 108, 109 voneinander und es entsteht eine Öffnung, durch die unter Einfluss der Schwerkraft Dosiergut 140 aus der Dosiereinheit 100 austreten kann. Die Öffnung des Auslasses 107 erfolgt damit gemäss der Lehre der EP 0 527 976 B1, wenn die seitlichen Druckkräfte der Backen 151, 152 auf den Dosierkopf 104 in der Längsrichtung der Auslasslippen 108, 109 wirken. Zur Schliessung des Auslasses 107 werden die Backen 151, 152 voneinander weg bewegt, bis keine Druckkräfte mehr auf den Dosierkopf 104 einwirken. Um im Aufnahmeraum 102 einer möglichen Brückenbildung des Dosiergutes 140 entgegenzuwirken, kann durch das elastische Material der Dosierkopf-Wand eine Aktivator-Nadel 130 gesteckt sein. Das spitze Ende 131 der Aktivator-Nadel 130 ist im Aufnahmeraum 102 und das andere Ende 132 mit einem nicht dargestellten Aktivator-Antrieb verbunden. Dieser erzeugt beliebige, auf den Dosierkopf 104 und das Dosiergut 140 abgestimmte Bewegungen, welche schematisch mit einem bogenförmigen Doppelpfeil 133 dargestellt sind.

Um die erfindungsgemässe oszillierende Bewegung auf die erste Auslasslippe 108 übertragen zu können, schliesst sich derselben ein erstes Übertragungsmittel 110 an. Das erste Übertragungsmittel 110 ist eine Zone des Dosierkopfs 104 mit höherer Steifigkeit als der Rest der Dosierkopf- Wand im Bereich des Auslasses 107. Diese Zone ist besser in der Figur 1B erkennbar, welche den Schnitt X-X des in der Figur 1A dargestellten Dosierkopfs 104 zeigt. Ferner sind in der Figur 1B auch die Backen 151, 152 des Dosiergeräts 150 dargestellt, mittels welchen der Auslass 107 geöffnet und geschlossen wird. Am ersten Übertragungsmittel 110 ist ein nasenförmiges Übertragungsglied 111 angeformt. Das Übertragungsglied 111 ist mit einem Antrieb 153 verbunden, wobei in den Figuren 1A und 1B nur das Kupplungsteil des Antriebs 153 dargestellt ist. Der Antrieb 153 erzeugt oszillierende Bewegungen 154 in der angegebenen Richtung, so dass sich die erste Auslasslippe 108 in ihrer Längsrichtung relativ zur zweiten Auslasslippe 109 bewegt. Diese Bewegungen sind vorzugsweise sehr kurzhubig, so dass der Schliessvorgang der Auslasslippen 108, 109 nicht beeinträchtigt wird.

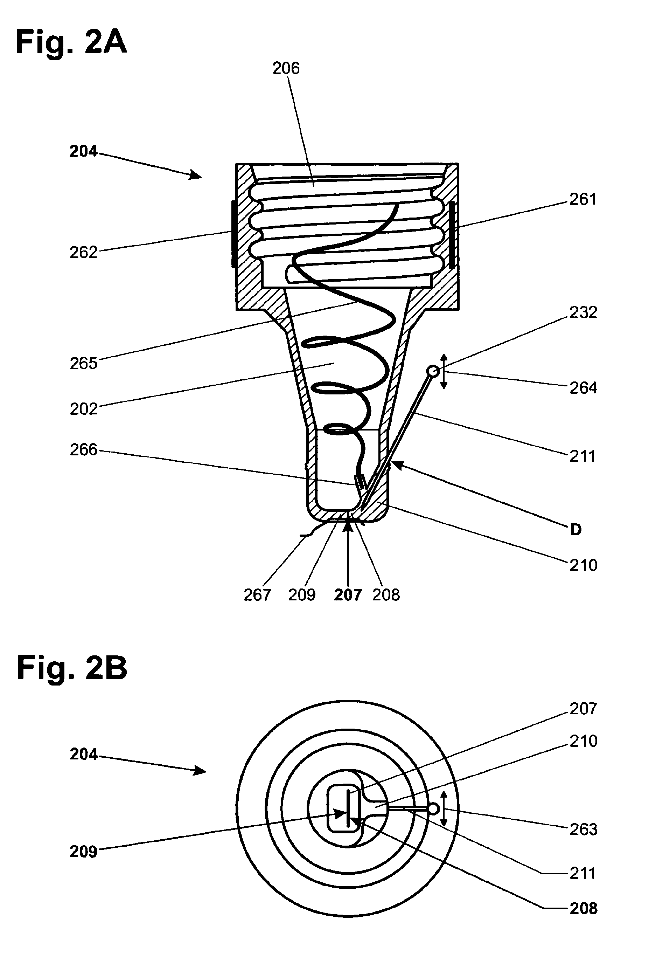

In der Figur 2A ist in geschnittenem Aufriss ein erfindungsgemässer Dosierkopf 204 aus elastischem Material dargestellt, die Figur 2B zeigt den Dosierkopf 204 der Figur 2A in der Ansicht von unten.

Damit der Dosierkopf 204 auf einfache Weise mit einem nicht dargestellten Gehäuse verbunden werden kann, ist diesem eine als Verbindungsbereich dienende Gewindemuffe 206 angeformt. Im Innern des Dosierkopfs 204 ist ein Hohlraum ausgebildet, der als Aufnahmeraum 202 für Dosiergut dient. Ferner kann im Dosierkopf 204 ein Identifikationsmittel 261, beispielsweise ein RFID-Transponder eingelassen sein. Selbstverständlich können auch andere Identifikationsmittel wie beispielsweise Etiketten oder Aufdrucke 262 mit Beschriftungen, Farbcodes, Matrix-oder Barcodes auf der Oberfläche des Dosierkopfs 204 angeordnet sein. Der Dosierkopf 204 weist wie das erste Ausführungsbeispiel der Figuren 1A und 1B einen schlitzförmigen Auslass 207 auf, welcher durch eine erste Auslasslippe 208 und eine zweite Auslasslippe 209 begrenzt ist. Eine der ersten Auslasslippe 208 anschliessende Materialanhäufung bildet ein erstes Übertragungsmittel 210. Ein in dieses Übertragungsmittel 210 eingestecktes, nadelförmiges Übertragungsglied 211 erhöht dessen Steifigkeit zusätzlich. Der Einstichpunkt D des nadelförmigen Übertragungsgliedes 211 bildet aufgrund des formbedingt hohen Flächenträgheitsmoments des Dosierkopfs 204 in diesem Bereich den Drehpunkt, um welchen das Übertragungsglied 211 verschwenkt, wenn die durch Doppelpfeile angedeuteten oszillierenden Bewegungen 263, 264 auf das freie Ende 232 des nadelförmigen Übertragungsgliedes 211 wirken. Diese oszillierenden Bewegungen 263, 264 werden durch einen nicht dargestellten Antrieb erzeugt.

In diesem Ausführungsbeispiel ist die Überlagerung zweier oszillierender Bewegungen 263, 264 dargestellt, wobei die in Figur 2B angedeuteten ersten Bewegungen 263 die Bewegungen der ersten Auslasslippe 208 in Längsrichtung bewirken. Diesen ersten oszillierenden Bewegungen 263 der ersten Auslasslippe 208 in Längsrichtung sind die in der Figur 2A angedeuteten oszillierenden zweiten Bewegungen 264 überlagert, wobei deren Bewegungsrichtung orthogonal zur Längsrichtung und Schliessrichtung der Auslasslippen 208 erfolgt.

Im Aufnahmeraum 202 ist ferner ein Aktuator 265 zur Eliminierung von Pulverbrücken und/oder zur Förderung des Dosiergutes zum Auslass 207 angeordnet. Der Aktuator 265 ist im Wesentlichen eine Drahtspirale, welche sich in den Aufnahmeraum 202 hinein erstreckt. Selbstverständlich können auch anders ausgestaltetet Aktuatoren 265 wie Blechstreifen, Stäbe, Haken und dergleichen mehr eingesetzt werden. Die Formgebung und Ausgestaltung des Aktuators 265 sind im Wesentlichen von den Fliesseigenschaften des Dosiergutes abhängig. Das eine Ende des Aktuators 265 steckt in einer Aufnahme 266, die sich in den Aufnahmeraum 202 hinein erstreckt und am Übertragungsmittel 210 angeformt ist. Dadurch sind oszillierende Bewegungen des Übertragungsmittels 210 auch auf den Aktuator 265 übertragbar.

Die Figur 2A zeigt ferner eine entfernbare Folie 267, welche den Auslass 207 abdeckt. Sobald der Dosierkopf 204 mit einem Gehäuse verbunden ist, kann die Folie 267 entfernt werden. Die Figur 2B zeigt den Dosierkopf 204 mit freigelegtem Auslass 207 und dem entsprechend ohne Folie 267.

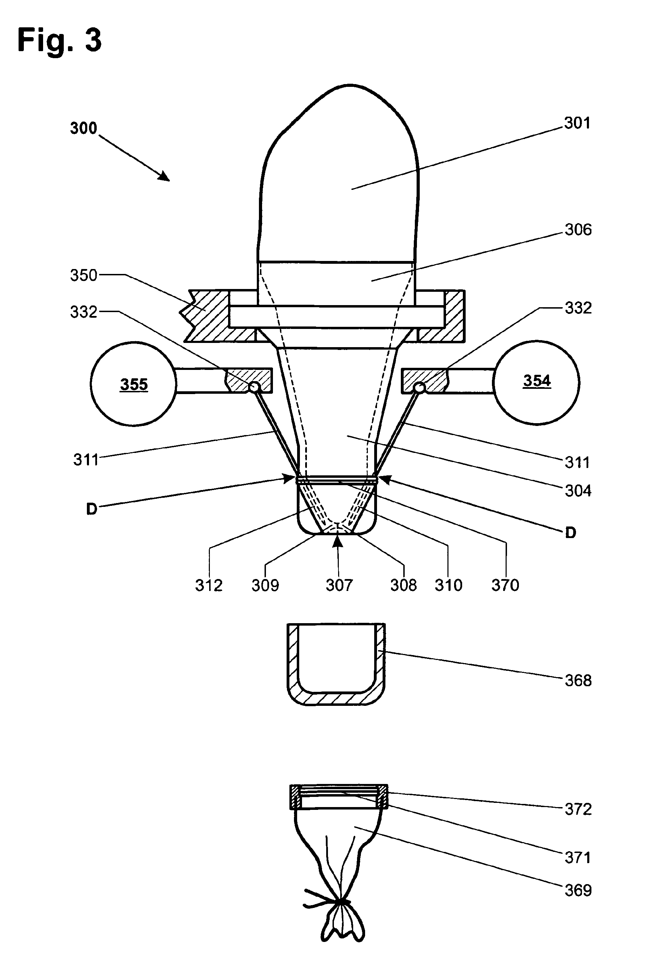

In Figur 3 ist ein drittes Ausführungsbeispiel einer erfindungsgemässen Dosiereinheit 300 im Aufriss dargestellt. Die Dosiereinheit 300 beinhaltet einen Dosierkopf 304 aus elastischem Material, welcher einen Schweissflansch 306 aufweist. Mit dem Schweissflansch 306 ist ein beutelförmiges Gehäuse 301 stoffschlüssig verbunden. Die Dosiereinheit 300 ist in einem teilweise dargestellten Dosiergerät 350 eingesetzt.

Wie beim vorangehenden Ausführungsbeispiel der Figur 2A, weist auch das in der Figur 3 dargestellte dritte Ausführungsbeispiel einen schlitzförmigen Auslass 307 auf, welcher durch eine erste Auslasslippe 308 und eine zweite Auslasslippe 309 begrenzt ist. Eine der ersten Auslasslippe 308 anschliessende Materialanhäufung bildet ein erstes Übertragungsmittel 310. Ferner ist in zur Mittellängsachse des Dosierkopfs 304 gespiegelter Ausgestaltung ein zweites Übertragungsmittel 312 vorhanden. Durch das zweite Übertragungsmittel 312 ist auf die zweite Auslasslippe 309 ebenfalls eine oszillierende Bewegung übertragbar, wobei sich die oszillierenden Bewegungen der ersten Auslasslippe 208 zu jener der zweiten Auslasslippe 209 zumindest in ihren Amplituden und/oder in den zueinander parallelen Bewegungsrichtungen unterscheiden.

Je ein in diese Übertragungsmittel 310, 312 eingestecktes, nadelförmiges Übertragungsglied 311 erhöht deren Steifigkeit zusätzlich. Die Einstichpunkte D der nadelförmigen Übertragungsglieder 311 bilden aufgrund des formbedingt hohen Flächenträgheitsmoments des Dosierkopfs 304 in diesem Bereich den Drehpunkt, um welchen das jeweilige Übertragungsglied 311 verschwenkt, wenn die orthogonal zur Zeichnungsebene gerichteten, oszillierenden Bewegungen auf das freie Ende 332 des nadelförmigen Übertragungsgliedes 311 wirken. Diese oszillierenden Bewegungen werden durch die beiden schematisch dargestellten Antriebe 354, 355 erzeugt, welche Teile des Dosiergeräts 350 sind.

Um die Dosiereinheit 300 auch als Lagerbehälter einsetzen zu können und ferner ein unabsichtliches Öffnen des Auslasses 307 während manueller oder automatisierter Bewegungsabläufe zu verhindern, kann eine Schutzkappe 368 vorhanden sein, die im aufgesetzten Zustand die Auslasslippen 308, 309 des Dosierkopfs 304 vollständig abdeckt. Die Schutzkappe 368 wird wie dargestellt erst entfernt, wenn die Dosiereinheit 300 in der Halterung eines dafür vorgesehenen Dosiergeräts 350 eingesetzt ist.

Um die Abdichtung des Dosierkopfs 304 zur Schutzkappe 368 zu verbessern, ist an einer elastischen Wand des Dosierkopfs 304 ein Dichtring 370 an der dem Aufnahmeraum abgewandten Seite angeformt. Dieser Dichtring 370 kann nicht nur dazu verwendet werden, dass die Schutzkappe 368 mittels Kraftschluss besser am Dosierkopf 304 hält und/oder diesen gasdicht abschliesst. Gegebenenfalls kann dieser Dichtring 370 auch als formschlüssige Verbindung für ein anschliessendes Behältnis 369, beispielhaft als zugebundener Schlauch dargestellt, dienen. Dessen Anschlussstelle 372 weist eine auf den Dichtring 370 abgestimmte Nut 371 auf. Der Formschluss garantiert einen sicheren Halt des Behältnisses 369 am Dosierkopf 304 und kann den Ringspalt zwischen dem Dosierkopf 304 und dem anschliessenden Behältnis 369 ausreichend abdichten, so dass die Umgebung nicht durch austretendes Dosiergut kontaminiert wird. Selbstverständlich sind die Schutzkappe 368 und das anschliessende Behältnis 369 auch bei den vorangehend beschriebenen Ausführungsbeispielen der Figuren 1A und 2A einsetzbar.

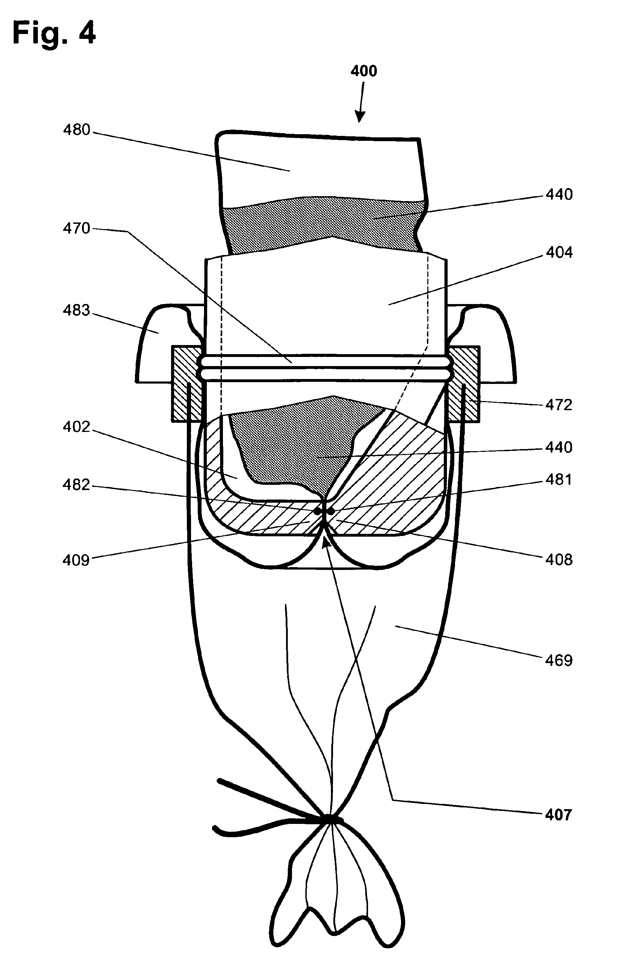

Die Figur 4 zeigt in teilweise geschnittenem Aufriss eine erfindungsgemässe Dosiereinheit 400 in kontaminationssicherer Ausführung. Die Dosiereinheit 400 beziehungsweise der nur teilweise dargestellte Dosierkopf 404 entspricht in seinem Aufbau der in der Figur 1 gezeigten Ausführung. Ferner zeigt die Figur 4 das in Figur 3 dargestellte anschliessbare Behältnis 469. Um den Dosierkopf 404 und das Dosiergut voneinander zu trennen, ist eine schlauchförmige Folie 480 vom Aufnahmeraum 402 der Dosiereinheit 400 durch den Auslass 407 hindurch geführt. Das Schlauchende 483 der schlauchförmigen Folie 480 ist bis über den Dichtring 470 des Dosierkopfs 404 zurückgestülpt. Das Schlauchende 483 wird mittels der Anschlussstelle 472 des anschliessbaren Behältnisses 469 am Dosierkopf 404 festgeklemmt. Das Dosiergut 440 befindet sich ausschliesslich im Innern der schlauchförmigen Folie 480 und kann daher nie in Kontakt mit dem Dosierkopf 404 gelangen und diesen kontaminieren.

Damit die erfindungsgemässen oszillierenden Bewegungen der ersten Auslasslippe 408 auf den dieser Auslasslippe 408 anliegenden Folienabschnitt übertragbar sind, muss der entsprechende Folienabschnitt der schlauchförmigen Folie 480 im Bereich des Auslasses 407 mittels Befestigungsmitteln 481, 482 mit der ersten Auslasslippe 408 und mit der zweiten Auslasslippe 409 mechanisch verbindbar sein. Als Befestigungsmittel 481, 482 dient eine formschlüssige Verbindung, wobei die Folienabschnitte Rippenabschnitte aufweisen, die in eine an den Auslasslippen 408, 409 ausgebildete Nut eingeschnappt werden können. Selbstverständlich ist dieses Befestigungsmittel nur eine von vielen Möglichkeiten, um die erfindungsgemässen Bewegungen der ersten Auslasslippe 408 auf den ihr anliegenden Folienabschnitt zu übertragen und damit trotz der Durchführung der schlauchförmigen Folie 480 durch den Auslass 407 die erwünschte Funktionssicherheit des Dosierkopfs 404 zu erreichen.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise ein Dosierkopf mit mehreren Verbindungsbereichen für mehrere Gehäuse. Ein Dosierkopf könnte auch mehrere Auslasse aufweisen, wobei zur Bedienung für jeden Auslass ein Backenpaar und ein Übertragungsglied zur Übertragung oszillierender Bewegungen auf die Auslasslippen vorhanden sein muss. Ferner sind bei allen Ausführungsbeispielen zusätzliche Einrichtungen am Dosierkopf oder Gehäuse möglich, beispielsweise Identifikationsmittel wie Barcodes, Matrixcodes und/oder Radio- Frequency- Identification Mittel (RFID- Transponder). Auch Gasanschlüsse zur Einbringung von Schutzgasen in die Dosiereinheit oder Kammern mit Feuchte- Bindemitteln können im Gehäuse und/oder Dosierkopf ausgebildet sein. Selbstverständlich ist die konkrete Ausgestaltung und Kopplung des Übertragungsgliedes mit dem Übertragungselement auf der einen Seite und dem Antrieb auf der anderen Seite nicht auf die dargestellten Ausführungsbeispiele beschränkt und liegt im Belieben des Fachmannes.

### Bezugszeichenliste

- 400, 300, 100: Dosiereinheit
- 301, 101: Gehäuse
- 402, 202, 102: Aufnahmeraum
- 103: Montagering
- 404, 304, 204, 104: Dosierkopf
- 105: Öffnung
- 106: Befestigungsflansch als Verbindungsbereich
- 407, 307, 207, 107: Auslass
- 408, 308, 208, 108: erste Auslasslippe
- 409, 309, 209, 109: zweite Auslasslippe
- 310, 210, 110: erstes Übertragungsmittel
- 111: nasenförmiges Übertragungsglied
- 120: Dosiergutzuführung
- 130: Aktivator-Nadel
- 131: spitzes Ende
- 132: anderes Ende
- 133: bogenförmiger Doppelpfeil
- 140: Dosiergut
- 350, 150: Dosiergerät
- 152, 151: Backe
- 355, 354, 153: Antrieb
- 154: oszillierende Bewegung
- 206: Gewindemuffe als Verbindungsbereich
- 311, 211: nadelförmiges Übertragungsglied
- 332, 232: freies Ende
- 261: Identifikationsmittel
- 262: Etikette oder Aufdruck
- 263: Doppelpfeil erste oszillierende Bewegungen
- 264: Doppelpfeil zweite oszillierende Bewegungen
- 265: Aktuator
- 266: Aufnahme
- 267: entfernbare Folie
- 306: Schweissflansch
- 312: zweites Übertragungsmittel
- 368: Schutzkappe
- 469, 369: anschliessbares Behältnis
- 470, 370: Dichtring
- 371: Nut
- 472, 372: Anschlussstelle
- 480: schlauchförmige Folie
- 482,481: Befestigungsmittel
- 483: Schlauchende

## Patentansprüche

1. Dosiereinheit (100, 300, 400) für pulver- oder granulatförmiges Dosiergut (140, 440), mit einem Gehäuse (101, 301), mit mindestens einem im Gehäuse (101, 301) ausgebildeten Aufnahmeraum (102, 202, 402) zur Aufnahme von Dosiergut (140, 440) und mit mindestens einem, elastisches Material aufweisenden Dosierkopf (104, 204, 304, 404), wobei der Dosierkopf (104, 204, 304, 404) einen im unbelasteten Zustand schlitzförmigen, durch eine erste Auslasslippe (108, 208, 308, 408) und eine zweite Auslasslippe (109, 209, 309, 409) begrenzten Auslass (107, 207, 307, 407) aufweist welcher unter seitlicher Belastung variabel erweiterbar ist, **dadurch gekennzeichnet, dass** mindestens ein erstes Übertragungsmittel (110, 210, 310) vorhanden ist, das dazu eingerichtet ist, relativ zur zweiten Auslasslippe (109, 209, 309, 409) und in Längsrichtung derselben, eine oszillierende Bewegung (154, 262, 263) auf die erste Auslasslippe (108, 208, 308, 408) zu übertragen.

2. Dosiereinheit (100, 300, 400) nach Anspruch 1, **dadurch gekennzeichnet, dass** den oszillierenden Bewegungen (154, 263) der ersten Auslasslippe (108, 208, 308, 408) in Längsrichtung oszillierende zweite Bewegungen (264) orthogonal zur Längsrichtung und zur Schliessrichtung der Auslasslippen (108,109, 208, 209, 308, 309, 408, 409) überlagert sind.

3. Dosiereinheit (100, 300, 400) nach Anspruch 1 oder 2, **dadurch gekennzeichnet, dass** ein zweites Übertragungsmittel (312) vorhanden ist, durch welches Übertragungsmittel (312) auf die zweite Auslasslippe (109, 209, 309, 409) eine oszillierende Bewegung (154, 263, 264) übertragbar ist, wobei sich die oszillierenden Bewegungen (154, 263, 264) der ersten Auslasslippe (108, 208, 308, 408) zu jener der zweiten Auslasslippe (109, 209, 309, 409) zumindest in ihren Amplituden und/oder in den zueinander parallelen Bewegungsrichtungen unterscheiden.

4. Dosiereinheit (100, 300, 400) nach einem der Ansprüche 1 bis 3, **dadurch gekennzeichnet, dass** das Übertragungsmittel (110, 210, 310, 312) als Zone höherer Steifigkeit im elastischen Material des Dosierkopfs (104, 204, 304, 404) ausgebildet ist die an die zugeordnete Auslasslippe (108,109, 208, 209, 308, 309, 408, 409) angrenzt und eine Verbindungsstelle für ein Übertragungsglied (111, 211, 311) aufweist.

5. Dosiereinheit (100, 300, 400) nach Anspruch 4, **dadurch gekennzeichnet, dass** das Übertragungsmittel (110, 210, 310, 312) eine als Übertragungsglied (111) dienende, angeformte Nase aufweist.

6. Dosiereinheit (100, 300, 400) nach Anspruch 4, **dadurch gekennzeichnet, dass** das Übertragungsglied (211, 311) zwischen einem Antrieb (153, 354, 355) des Übertragungsmittels (110, 210, 310, 312) und dem Übertragungsmittel (110, 210, 310, 312) eine Nadel ist.

7. Dosiereinheit (100, 300, 400) nach einem der Ansprüche 1 bis 6, **dadurch gekennzeichnet, dass** ein Aktuator (265) im Aufnahmeraum (102, 202, 402) angeordnet und mit dem Übertragungsmittel (110, 210, 310, 312) verbunden ist.

8. Dosiereinheit (100, 300, 400) nach Anspruch 7, **dadurch gekennzeichnet, dass** der Aktuator (265) eine Drahtspirale ist.

9. Dosiereinheit (100, 300, 400) nach einem der Ansprüche 1 bis 8, **dadurch gekennzeichnet, dass** eine Aktivator-Nadel (130) eine elastischen Wand des Dosierkopfs (104, 204, 304, 404) durchdringend angeordnet ist, wobei das spitze Ende (131) der Aktivator-Nadel (130) im Aufnahmeraum (102, 202, 402) angeordnet ist und das andere Ende (132) mit einem Antrieb (153, 354, 355) des Übertragungsmittels (110, 210, 310, 312) verbunden oder mit einem Aktivator-Antrieb verbunden ist.

10. Dosiereinheit (100, 300, 400) nach einem der Ansprüche 1 bis 9, **dadurch gekennzeichnet, dass** eine Schutzkappe (368) vorhanden ist, die im aufgesetzten Zustand die Auslasslippen (108,109, 208, 209, 308, 309, 408, 409) des Dosierkopfs (104, 204, 304, 404) vollständig abdeckt.

11. Dosiereinheit (100, 300, 400) nach einem der Ansprüche 1 bis 10, **dadurch gekennzeichnet, dass** an einer elastischen Wand des Dosierkopfs (104, 204, 304, 404) ein Dichtring (370, 470) an der dem Aufnahmeraum (102, 202, 402) abgewandten Seite angeformt ist.

12. Dosiereinheit (100, 300, 400) nach einem der Ansprüche 1 bis 11, **dadurch gekennzeichnet, dass** der Auslass (107, 207, 307, 407) in neuwertigem Zustand mit einer entfernbaren Folie (267) bedeckt ist.

13. Dosiereinheit (100, 300, 400) nach einem der Ansprüche 1 bis 12, **dadurch gekennzeichnet, dass** die Dosiereinheit (100, 300, 400) einen Verbindungsbereich (106, 206) aufweist, durch die ein Behältnis (369, 469) mit dem Aufnahmeraum (102, 202, 402) verbindbar ist.

14. Dosiereinheit (100, 300, 400) nach einem der Ansprüche 1 bis 13, **dadurch gekennzeichnet, dass** der Dosierkopf (104, 204, 304, 404) eine den Auslass (107, 207, 307, 407) umfassende Anschlussstelle (372, 472) für ein Behältnis (369, 469) aufweist.

15. Dosiereinheit (100, 300, 400) nach einem der Ansprüche 1 bis 14, **dadurch gekennzeichnet, dass** die Oberfläche des Dosierkopfs (104, 204, 304, 404) mit einer Beschichtung versehen ist.

16. Dosiereinheit (100, 300, 400) nach einem der Ansprüche 1 bis 15, **dadurch gekennzeichnet, dass** eine schlauchförmige Folie (480) vom Aufnahmeraum (102, 202, 402) durch den Auslass (107, 207, 307, 407) hindurch geführt ist, wobei im Bereich des Auslasses (107, 207, 307, 407) Folienabschnitte der schlauchförmigen Folie (480) mittels Befestigungsmitteln (481, 482) mit der ersten Auslasslippe (108, 208, 308, 408) und mit der zweiten Auslasslippe (109, 209, 309, 409) mechanisch verbindbar sind, so dass die oszillierenden Bewegungen (154, 263, 264) der Auslasslippe (108,109, 208, 209, 308, 309, 408, 409) auf den mit dieser Auslasslippe (108,109, 208, 209, 308, 309, 408, 409) verbundenen Folienabschnitt übertragbar sind.

17. Dosiergerät (150, 350) mit mindestens einer Dosiereinheit (100, 300, 400) nach einem der Ansprüche 1 bis 16.

## Claims

1. Dosage-dispensing unit (100, 300, 400) for dosage material (140, 440) of a powdery or granular consistency, with a housing (101, 301), with at least one reservoir cavity (102, 202, 402) that is formed inside the housing (101, 301) and serves to receive dosage material (140, 440), and with at least one dispensing head (104, 204, 304, 404) comprising an elastomeric material, wherein the dispensing head (104, 204, 304, 404) has an outlet orifice (107, 207, 307, 407) which is slit-shaped in its non-deformed state and is delimited by a first outlet lip (108, 208, 308, 408) and a second outlet lip (109, 209, 309, 409), and which can be opened to a variable width by the application of a lateral compressive force, **characterized in that** the arrangement further comprises at least a first motion-transmitting means (110, 201, 310) designed to impart an oscillatory movement (154, 262, 263) to the first outlet lip (108, 208, 308, 408) relative to, and in the lengthwise direction of, the second outlet lip (109, 209, 309, 409).

2. Dosage-dispensing unit (100, 300, 400) according to claim 1, **characterized in that** the oscillatory movements (154, 263) of the first outlet lip (108, 208, 308, 408) in the lengthwise direction are accompanied by superimposed secondary oscillatory movements (264) that are orthogonal to the lengthwise direction and to the closing direction of the outlet lips (108, 109, 208, 209, 308, 309, 408, 409).

3. Dosage-dispensing unit (100, 300, 400) according to claim 1 or 2, **characterized in that** the arrangement further includes a second motion-transmitting means (312) designed to impart an oscillatory movement (154, 263, 264) to the second outlet lip (109, 209, 309, 409), wherein the oscillatory movements of the first outlet lip (108, 208, 308, 408) are distinguished from those of the second outlet lip (109, 209, 309, 409) by having at least different amplitudes and/or opposed parallel directions.

4. Dosage-dispensing unit (100, 300, 400) according to one of the claims 1 to 3, **characterized in that** the motion-transmitting means (110, 210, 310, 312) is configured as a zone of increased stiffness in the elastomeric material of the dispensing head (104, 204, 304, 404), wherein the zone of increased stiffness adjoins the respective outlet lip (108, 109, 208, 209, 308, 309, 408, 409) and comprises a connector area for a motion-transmitting member (111, 211, 311).

5. Dosage-dispensing unit (100, 300, 400) according to claim 4, **characterized in that** the motion-transmitting means (110, 210, 310, 312) comprises a nose-shaped projection serving as motion-transmitting member (111).

6. Dosage-dispensing unit (100, 300, 400) according to claim 4, **characterized in that** the motion-transmitting member (211, 311) between a drive mechanism (153, 354, 355) of the motion-transmitting means (110, 210, 310, 312) and the motion-transmitting means (110, 210, 310, 312) is a needle.

7. Dosage-dispensing unit (100, 300, 400) according to one of the claims 1 to 6, **characterized in that** an actuator (265) is arranged in the reservoir cavity (102, 202, 402) and connected to the motion-transmitting means (110, 210, 310, 312).

8. Dosage-dispensing unit (100, 300, 400) according to claim 7, **characterized in that** the actuator (265) is a wire spiral.

9. Dosage-dispensing unit (100, 300, 400) according to one of the claims 1 to 8, **characterized in that** an activator needle (130) is arranged piercing through an elastomeric wall of the dispensing head (104, 204, 304, 404), wherein the sharp-pointed end (131) of the activator needle (130) is disposed inside the reservoir cavity (102, 202, 402), and the opposite end (132) is connected to an activator drive mechanism (153, 354, 355) of the motion-transmitting means (110, 210, 310, 312) or to an activator drive mechanism.

10. Dosage-dispensing unit (100, 300, 400) according to one of the claims 1 to 9, **characterized in that** a protective cap (368) is provided which, when put into place, completely covers the outlet lips (108, 109, 208, 209, 308, 309, 408, 409) of the dispensing head (104, 204, 304, 404).

11. Dosage-dispensing unit (100, 300, 400) according to one of the claims 1 to 10, **characterized in that** a seal ring (370, 470) is integrally formed on an elastomeric wall portion of the dispensing head (104, 204, 304, 404) on the side that faces away from the reservoir cavity (102, 202, 402).

12. Dosage-dispensing unit (100, 300, 400) according to one of the claims 1 to 11, **characterized in that** the outlet orifice (107, 207, 307, 407) in the new, unused condition is covered with a removable foil (267).

13. Dosage-dispensing unit (100, 300, 400) according to one of the claims 1 to 12, **characterized in that** the dosage-dispensing unit (100, 300, 400) comprises a connector area (106, 206) which allows a vessel (369, 469) to be connected to the reservoir cavity (102, 202, 402).

14. Dosage-dispensing unit (100, 300, 400) according to one of the claims 1 to 13, **characterized in that** the dispensing head (104, 204, 304, 404) comprises a connector area (372, 472) surrounding the outlet orifice (107, 207, 307, 407) for a vessel (369, 469).

15. Dosage-dispensing unit (100, 300, 400) according to one of the claims 1 to 14, **characterized in that** the surface of the dispensing head (104, 204, 304, 404) is covered with a coating.

16. Dosage-dispensing unit (100, 300, 400) according to one of the claims 1 to 15, **characterized in that** a hose-shaped foil lining (480) is laid in the reservoir cavity (102, 202, 402) and through the outlet orifice (107, 207, 307, 407), wherein in the area of the outlet orifice (107, 207, 307, 407), sections of the hose-shaped foil lining (480) are mechanically attachable to the first outlet lip (108, 208, 308, 408) and to the second outlet lip (109, 209, 309, 409) in order to enable the oscillatory movements (154, 263, 264) of the outlet lips (108, 109, 208, 209, 308, 309, 408, 409) to be transmitted to the foil section connected to the respective outlet lip (108, 109, 208, 209, 308, 309, 408, 409).

17. Dosage-dispensing instrument (150, 350) with at least one dosage-dispensing unit (100, 300, 400) according to one of the claims 1 to 16.

## Revendications

1. Unité de dosage (100, 300, 400) pour un produit à doser (140, 440) sous forme de granules ou de poudre, avec un boîtier (101, 301), avec au moins une chambre d'admission (102, 202, 402) formée dans le boîtier (101, 301), pour la réception du produit à doser (140, 440), et avec au moins une tête de dosage (104, 204, 304, 404) comportant une matière élastique, dans laquelle la tête de dosage (104, 204, 304, 404) comporte une évacuation (107, 207, 307, 407) en forme de fente dans l'état non chargé, délimitée par une première lèvre d'évacuation (108, 208, 308, 408) et une deuxième lèvre d'évacuation (109, 209, 309, 409) et apte à être agrandie de façon variable sous une charge latérale, **caractérisée en ce qu'**il est prévu au moins un premier moyen de transmission (110, 210, 310) conçu pour transmettre à la première lèvre d'évacuation (108, 208, 308, 408) un mouvement oscillant (154, 262, 263) par rapport à la deuxième lèvre d'évacuation (109, 209, 309, 409) et dans le sens longitudinal de celle-ci.

2. Unité de dosage (100, 300, 400) selon la revendication 1, **caractérisée en ce que** des deuxièmes mouvements oscillant dans le sens longitudinal (264) sont superposés aux mouvements oscillants (154, 263) de la première lèvre d'évacuation (108, 208, 308, 408), orthogonalement au sens longitudinal et au sens de fermeture des lèvres d'évacuation (108, 109, 208, 209, 308, 309, 408, 409).

3. Unité de dosage (100, 300, 400) selon la revendication 1 ou 2, **caractérisé en ce qu'**il est prévu un deuxième moyen de transmission (312), ledit moyen de transmission (312) permettant de transmettre un mouvement oscillant (154, 263, 264) à la deuxième lèvre d'évacuation (109, 209, 309, 409), dans laquelle les mouvements oscillants (154, 263, 264) de la première lèvre d'évacuation (108, 208, 308, 408) se distinguent de ceux de la deuxième lèvre d'évacuation (109, 209, 309, 409), au moins par leur amplitude et/ou dans les directions de déplacement parallèles entre elles.

4. Unité de dosage (100, 300, 400) selon l'une des revendications 1 à 3, **caractérisée en ce que** le moyen de transmission (110, 210, 310, 312) est conçu comme une zone à rigidité supérieure dans le matériau élastique de la tête de dosage (104, 204, 304, 404) tout en étant adjacent à la lèvre d'évacuation (108, 109, 208, 209, 308, 309, 408, 409) correspondante, et comporte un point de liaison pour un organe de transmission (111, 211, 311).

5. Unité de dosage (100, 300, 400) selon la revendication 4, **caractérisée en ce que** le moyen de transmission (110, 210, 310, 312) comporte un nez servant d'organe de transmission (111).

6. Unité de dosage (100, 300, 400) selon la revendication 4, **caractérisée en ce que** l'organe de transmission (211, 311) entre un entraînement (153, 354, 355) du moyen de transmission (110, 210, 310, 312) et le moyen de transmission (110, 210, 310, 312) est une aiguille.

7. Unité de dosage (100, 300, 400) selon l'une des revendications 1 à 6, **caractérisée en ce qu'**un actionneur (265) est agencé dans la chambre d'admission (102, 202, 402) et relié au moyen de transmission (110, 210, 310, 312).

8. Unité de dosage (100, 300, 400) selon la revendication 7, **caractérisée en ce que** l'actionneur (265) est une spirale en fil de fer.

9. Unité de dosage (100, 300, 400) selon l'une des revendications 1 à 8, **caractérisée en ce qu'**une aiguille d'activateur (130) est agencée de manière à traverser une paroi élastique de la tête de dosage (104, 204, 304, 404), dans laquelle l'extrémité pointue (131) de l'aiguille d'activateur (130) est agencée dans la chambre d'admission (102, 202, 402), tandis que l'autre extrémité (132) est reliée à un entraînement (153, 354, 355) du moyen de transmission (110, 210, 310, 312) ou à un entraînement d'activateur.

10. Unité de dosage (100, 300, 400) selon l'une des revendications 1 à 9, **caractérisée en ce qu'**il est prévu un capuchon de protection (368) recouvrant complètement les lèvres d'évacuation (108, 109, 208, 209, 308, 309, 408, 409) de la tête de dosage (104, 204, 304, 404) lorsqu'il est placé sur celles-ci.

11. Unité de dosage (100, 300, 400) selon l'une des revendications 1 à 10, **caractérisée en ce que** sur une paroi élastique de la tête de dosage (104, 204, 304, 404), une bague d'étanchéité (370, 470) est formée sur le côté détourné de la chambre d'admission (102, 202, 402).

12. Unité de dosage (100, 300, 400) selon l'une des revendications 1 à 11, **caractérisée en ce qu'**à l'état neuf, l'évacuation (107, 207, 307, 407) est recouverte d'une feuille amovible (267).

13. Unité de dosage (100, 300, 400) selon l'une des revendications 1 à 12, **caractérisée en ce que** l'unité de dosage (100, 300, 400) comporte une région d'assemblage (106, 206) permettant de relier un récipient (369, 469) à la chambre d'admission (102, 202, 402).

14. Unité de dosage (100, 300, 400) selon l'une des revendications 1 à 13, **caractérisée en ce que** la tête de dosage (104, 204, 304, 404) comporte un point de liaison (372, 472) entourant l'évacuation (107, 207, 307, 407), pour un récipient (369, 469) .

15. Unité de dosage (100, 300, 400) selon l'une des revendications 1 à 14, **caractérisée en ce que** la surface supérieure de la tête de dosage (104, 204, 304, 404) est pourvue d'un revêtement.

16. Unité de dosage (100, 300, 400) selon l'une des revendications 1 à 15, **caractérisée en ce qu'**une feuille en forme de tube (480) est guidée à partir de la chambre d'admission (102, 202, 402) et à travers l'évacuation (107, 207, 307, 407), dans laquelle, dans la région de l'évacuation (107, 207, 307, 407), des segments de feuille de la feuille en forme de tube (480) peuvent être reliés mécaniquement à la première lèvre d'évacuation (108, 208, 308, 408) et à la deuxième lèvre d'évacuation (109, 209, 309, 409) à l'aide de moyens de fixation (481, 482), de manière à ce que les mouvements oscillants (154, 263, 264) de la lèvre d'évacuation (108, 109, 208, 209, 308, 309, 408, 409) peuvent être transmis au segment de feuille relié à cette lèvre d'évacuation (108, 109, 208, 209, 308, 309, 408, 409).

17. Dispositif de dosage (150, 350) avec au moins une unité de dosage (100, 300, 400) selon l'une des revendications 1 à 16.
